# EUROPEAN PATENT APPLICATION

(11) **EP 3 334 087 A1**
(43) Date of publication of application: **13.06.2018**
(21) Application number: 16203499.5
(22) Date of filing: 12.12.2016
(51) Int. Cl.: H04L 9/32

(54) **PUF BASED METHOD AND SYSTEM FOR CLOUD AUTHENTICATION WITHOUT ANY PASSWORDS AND SMARTCARDS**

(71) Applicant: Deutsche Telekom AG, 53113 Bonn (DE); Technische Universität Berlin, 10623 Berlin (DE)
(72) Inventor: ROSHANDEL, Mehran, 13591 Berlin (DE); TAJIK, Shahin, 12105 Berlin (DE)
(74) Representative: Vossius & Partner Patentanwälte Rechtsanwälte mbB

(57) **Abstract**

The invention relates to a method for remote authentication of a device via a network connection with the device, the method comprising two phases: an enrollment phase carried out whilst the device is in an trusted network environment, wherein a plurality of challenge-response pairs is generated by sending a plurality of challenges from an authentication module to a physically unclonable function in the device and receiving a plurality of respective first responses from the physically unclonable function in response to the plurality of challenges and a remote authentication phase carried out whilst the device is in a not-trusted network environment. The invention further relates to a system, device, and authentication module to carry out the method.

## Description

The invention relates to the field of telecommunication. In particular the invention relates to the field of secure authentication of a device in a network. Specifically, the invention relates to a new approach for cloud authentication without the use of smartcard and password. The method and system are based on exploiting embedded Physically Unclonable Functions (PUFs) to authenticate with remote servers in a network. Since PUFs are generally considered a solution for secure storage of keys, an adversary cannot steal the keys for the authentication with any known attack techniques.

Secure authentication with network services is one of the main challenges in the telecommunication industry. Existing solutions for authentication, such as using passwords and smartcards, have shown their vulnerabilities to different kind of attacks. Therefore, passwords and smartcards cannot be trusted as a secure solution for authentication.

On the other hand, Physically Unclonable Functions (PUFs) can be used to overcome the shortcomings of previous approaches. The response behavior of a PUF is unique for each device and is, e.g., based on random manufacturing process variations. A PUF may be also referred to as a device fingerprint.

PUFs are physical primitives, which accept binary inputs called *challenge* and generate a binary output called *response.* By trying a challenge multiple times, the response will be constant for the same device, but different responses are generated for different devices. This fact makes each device unique.

It is commonly known that secret keys generated by a PUF on a specific device cannot be regenerated on any other device. Even if the attacker has a direct access to the specific device, the key cannot be readout, because the secret key is generated in a remote process in response to server request, i.e. a challenge, and no secret key is stored in the memory of the specific device or elsewhere.

Using a password for authentication is the most common way to authenticate a device within a network. However, there are many challenges known to the skilled person when using passwords for authentication. First, the characters of passwords should be chosen as much random as possible in order to make the guessing of the password as hard as possible. However, since most passwords today are chosen manually by humans, who are not able to generate totally random characters for a password, the goal of randomness is virtually never achieved.

Furthermore, it has been shown that due to software implementation bugs, hackers are able to steal the passwords or any other credentials from virtually any client device, if given proper recourses and/or incentive. There are many known techniques to steal password, e.g., using security cameras in the buildings or using key loggers.

In one approach to mitigate the common software implementation problems, many manufactures try to hide an authentication device in the hardware. In this case the password may be embedded, e.g., in a memory of a smartcard that is utilized to authenticate a client with the network. Although, this technique overcomes the problem of remote attacks on the client's device, it is still possible to attack these devices by having physical access to them.

Non-invasive attacks such as power and timing analysis can recover the secret key even with inexpensive equipment. Many countermeasures exist to neutralize these kinds of attacks. However, semi-invasive and fully-invasive attacks such as photonic side channels and probing leave no chance for any hardware countermeasures.

It is therefore an object of the present invention to provide a method, a module, a system, and devices to improve authentication without any passwords and smartcards. This object is solved by the features of the subject-matter of the independent claims. The dependent claims relate to further aspects of the invention.

The invention relates to a method for remote authentication of a device via a network connection with the device, the method comprising two phases. In an enrollment phase carried out whilst the device is in an trusted network environment, a plurality of challenge-response pairs (CRP) is generated by sending a plurality of challenges from an authentication module to a physically unclonable function in the device and receiving a plurality of respective first responses from the physically unclonable function in response to the plurality of challenges, and the plurality of generated challenge-response pairs are stored in a database within the trusted network. In a remote authentication phase carried out whilst the device is in a not-trusted network environment, at least one of the plurality of challenge-response pairs is retrieved by a authentication module from the database and the challenge is sent to the physically unclonable function in the device via the network connection. A second response is received from the physically unclonable function in response to the challenge and the second response, which is sent from the device to the authentication module via the network connection. The authentication module compares the first response from the database and the second response received from the device and authenticates the device, when the first and second responses are the same.

In another aspect of the invention the physically unclonable function in the device is a part of regular hardware circuitry on the device, preferably a bistable circuitry.

In another aspect of the invention the physically unclonable function in the device is a static random-access memory of the device.

In another aspect of the invention every challenge-response pair in the database has a predetermined lifetime and is not used for authentication after the predetermined lifetime has expired.

In another aspect of the invention every challenge-response pair in the database is only used once for authentication.

The invention further relates to an authentication module for remote authentication of a device via a network connection with the device. The authentication module is configured to generate a plurality of challenge-response pairs by sending a plurality of challenges to a physically unclonable function in the device and receiving a plurality of respective first responses from the physically unclonable function in response to the plurality of challenges in an enrollment phase carried out whilst the device is in a trusted network environment. The authentication module is configured to store the plurality of challenge-response pairs in a database within the trusted network in the enrollment phase carried out whilst the device is in a trusted network environment. The authentication module is configured to retrieve at least one of the plurality of the challenge-response pairs from the database and to send the challenge to the physically unclonable function in the device via the network connection (in a remote authentication phase carried out whilst the device is in an not-trusted network environment. The authentication module is configured receive a second response from the physically unclonable function in response to the challenge, sent from the device to the authentication module via the network connection. The authentication module is configured to compare the first response from the database and the second response received from the device and to authenticate the device when the first and second response are the same.

In another aspect of the invention the authentication module is configured to assign a predetermined lifetime to every challenge-response pair in the database and is configured to not use the challenge-response pair for authentication after the predetermined lifetime has expired.

In another aspect of the invention the authentication module is configured to use every challenge-response pair in the database only once for authentication.

The invention further relates to a device for remote authentication with an authentication module, preferably as described above, via a network connection with the device. The device is configured to receive the plurality of challenges from the authentication module and to send via the network connection the plurality of respective first responses received from a physically unclonable function in the device in response to the plurality of challenges in an enrollment phase carried out whilst the device is in an trusted network environment. The device is configured to receive a challenge from the authentication module and to send via the network connection a second response received from a physically unclonable function in the device in response to the challenge in a remote authentication phase carried out whilst the device is in an not-trusted network environment.

In another aspect of the invention the physically uncloneable function in the device is a part of regular hardware circuitry on the device, preferably a bistable circuitry.

In another aspect of the invention the physically uncloneable function in the device is a static random-access memory of the device.

The invention further relates to a system configured to perform the method, as described above, to authenticate a device, as described above, via a network connection with the device. The system comprises a remote authentication module, preferably as described above.

PUFs have been introduced to mitigate the known types of attacks on a device. Utilizing the manufacturing process variations on identical chips to generate the password is the core idea of the PUFs.

In one embodiment of the invention, before a challenge-response pairs (CRP) can be used for the authentication, a subset of CRPs are generated during an enrollment phase and stored in a database. During authentication, a number of stored challenges are applied to the device and the generated response will be compared with the stored responses in the database. If the responses are the same for the same challenges, the authentication will be successful.

Digital intrinsic PUFs can be classified into two groups: time-based PUFs and memory-based PUFs. Memory-based PUFs are utilizing bistable circuits such as SRAM cells during powering up the device to generate random responses. The advantage of memory-based PUFs is that they exist already in almost all computational devices and no extra circuitry is required.

In another embodiment of the invention when a user wants to connect with a computational device to servers remotely and use cloud services, a secure authentication phase is be carried out. This step was traditionally done by simply entering passwords or inserting a smartcard to the device, which has a secret key being stored on that.

However, in one embodiment of the invention a part of circuit on hardware of the device is used as a PUF to generate the secret keys. In this embodiment, the device is first engaging in an enrollment phase and a subset of CRPs are stored in a database. During a remote authentication with the cloud services the challenges are applied by the remote servers on the device and the response will be sent to the servers as a secret key for logging in.

To further protect the connection, each CRP has a lifetime, and therefore, it will be expired after that lifetime. Due to the limited lifetime of CRPs, even if the device is stolen, the CRPs become obsolete after a while. Moreover, each CRP has to be verified once, and be deleted. If an intruder intercepts the communication and obtains one or more of CRPs, this mechanism prevents the intruder to reuse the same CRP for authentication.

### Brief description of the drawings

The accompanying drawings, which are included to provide a further understanding of the invention, illustrate embodiments of the invention and together with the description serve to explain the principle of the invention.

In the drawings:
- Fig. 1: shows an illustration an embodiment of the invention during a enrollment phase, and
- Fig. 2: shows an illustration an embodiment of the invention during a remote authentication phase.

### Detailed description of the invention

Reference will now be made in detail to the preferred embodiments of the present invention, examples of which are illustrated in the accompanying drawings. The accompanying drawings illustrate exemplary embodiments of the present invention and provide a more detailed description of the present invention. However, the scope of the present invention should not be limited thereto.

In the meantime, although terms including an ordinal number, such as first or second, may be used to describe a variety of constituent elements, the constituent elements are not limited to the terms, and the terms are used only for the purpose of discriminating one constituent element from other constituent elements.

In addition, wherever possible, the same reference numbers will be used throughout the drawings to refer to the same or like parts, and a repeated description thereof will be omitted.

The terms cloud and network are synonymously used throughout the description. The skilled person realizes that the solution for authentication is applicable to all kinds of network related services.

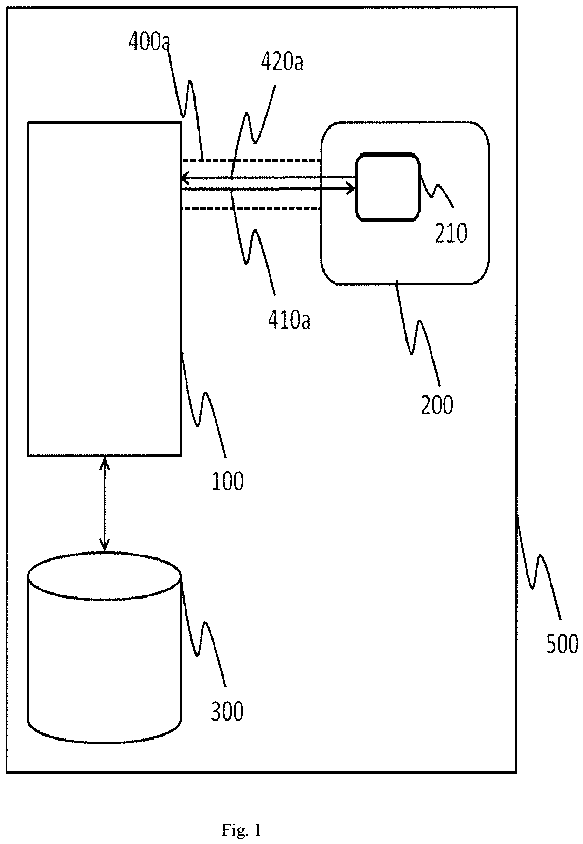

Figure 1 shows an illustration an embodiment of the invention during a enrollment phase. A device 200 is within a same trusted network 500 as a authentication module 100 and a database 300. The device 200 communicates with the authentication module 100 via a network connection 400a. The authentication module 100 communicates with the device 200 and the database 300. The database communicates with the authentication module 100.

The authentication module 100 is configured to send a challenge 410a to a PUF 210 on the device 200. Furthermore, the authentication module 100 is configured to receive a response 420a to the challenge 410a from the PUF 210 on the device 200. The authentication module is further configured to send, store, and/or retrieve at least one challenge 410a and response 420a pair CRP in the database 300.

The database 300 is configured to sent, receive, store, and/or manage a plurality of CRPs. The device 200 is configured to receive the challenge 410a from the authentication module 100. The PUF 210 on the device 200 is configured to generate response 420a to the challenge 410a received from the authentication module 100. The device is configured to send the response 420a via the network connection 400a to the authentication module 100.

In a preferred embodiment during the enrollment phase the following steps are performed:
In a first step, at least one, preferably a plurality of challenges 410a are send from the authentication module 100 to the device 200. The challenges 410a are received by the device 200 and the PUF generates at least one, preferably a plurality of respective responses 420a. In a second step, the responses 420a are sent from the device 200 to the authentication module.

In a third step, the authentication module receives the responses 420a and stores the CRP in the database 300.

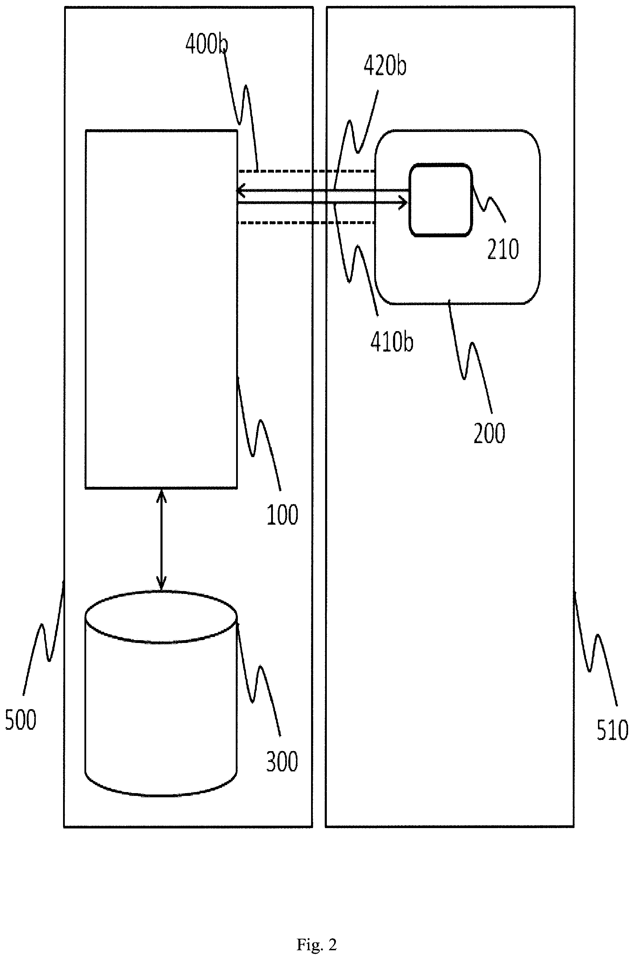

Fig. 2 shows an illustration an embodiment of the invention during a remote authentication phase.

The device 200 is within a not- trusted network 510. and the authentication module 100 and the database 300 are in a trusted network 500. The device 200 communicates with the authentication module 100 via a network connection 400b. The authentication module 100 communicates with the device 200 and the database 300. The database communicates with the authentication module 100.

The authentication module is configured to retrieve at least one CRP from the database 300. The CRP contains a challenge part 410a and a response part 420b. The authentication module 100 is configured to send a challenge 410b, which is identical to the challenge 410a, to the PUF 210 on the device 200. Furthermore, the authentication module 100 is configured to receive a response 420b to the challenge 410b from the PUF 210 on the device 200. The authentication module is further configured to compare the first response 420a and the second response 420b and configured to authenticate the device 200, when the first response 420a and the second response 420b are the same.

The database 300 is configured to sent, receive, store, and/or manage a plurality of CRPs. The device 200 is configured to receive the challenge 410b from the authentication module 100. The PUF 210 on the device 200 is configured to generate second response 420b to the challenge 410b received from the authentication module 100. The device is configured to send the response 420b via the network connection 400b to the authentication module 100.

In a preferred embodiment during the remote authentication phase the following steps are performed:
In a first step, the authentication module 100 retrieves at least one CRP from the database 300. The challenge 410a from the CRP is send from the authentication module 100 to the device 200 as a new challenge 410b via a network connection 400b.

In a second step, the challenge 410b is received by the device 200 and the PUF 210 on the device 200 generates a second response 420b to the challenge 410b. The second response 420b is send from the device 200 to the authentication module 100.

In a third step, the authentication module compares the first response 420a from the CRP with the second response 420b and authenticates the device 200, if the first and second responses are the same.

To improve the security of the authentication the above method may be combined with further security features. In one embodiment a predetermined lifetime is assigned to each CRP, thus preventing the use of a potentially compromised CRP which has been stored in the database for too long. In one embodiment each CRP is only used once and deleted after it was used, thus preventing the reuse of a valid CRP if the communication is intercepted.

While the invention has been illustrated and described in detail in the drawings and foregoing description, such illustration and description are to be considered illustrative or exemplary and non-restrictive; the invention is thus not limited to the disclosed embodiments. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality and may mean "at least one".

## Claims

1. A method for remote authentication of a device (200) via a network connection (400) with the device, the method comprising two phases:
an enrollment phase carried out whilst the device (200) is in an trusted network environment (500),
wherein a plurality of challenge-response pairs is generated by sending a plurality of challenges (410a) from an authentication module (100) to a physically unclonable function (210) in the device (200) and receiving a plurality of respective first responses (420a) from the physically unclonable function (210) in response to the plurality of challenges (410a), and
wherein the plurality of generated challenge-response pairs are stored in a database (300) within the trusted network (500);
a remote authentication phase carried out whilst the device (200) is in a not-trusted network environment (510),
wherein at least one of the plurality of challenge-response pairs is retrieved by a authentication module (100) from the database (300) and the challenge (410b) is sent to the physically unclonable function (210) in the device (200) via the network connection (400b),
wherein a second response (420b) is received from the physically unclonable function (210) in response to the challenge (410b) and the second response (420b) is sent from the device (200) to the authentication module (100) via the network connection (400b), and
wherein the authentication module (100) compares the first response (420a) from the database (300) and the second response (420b) received from the device (200) and authenticates the device (200) when the first and second response (420a,420b) are the same.

2. The method of claim 1, wherein the physically unclonable function (210) in the device (200) is a part of regular hardware circuitry on the device (200), preferably a bistable circuitry.

3. The method of claims 1 or 2, wherein the physically unclonable function (210) in the device (200) is a static random-access memory of the device (200).

4. The method of any one of claims 1 to 3, wherein every challenge-response pair in the database (300) has a predetermined lifetime and is not used for authentication after the predetermined lifetime has expired.

5. The method of any one of claims 1 to 4, wherein every challenge-response pair in the database (300) is only used once for authentication.

6. An authentication module (100) for remote authentication of a device (200) via a network connection (400a, 400b) with the device (200),
wherein the authentication module (100) is configured to generate a plurality of challenge-response pairs by sending a plurality of challenges (410a) to a physically unclonable function (210) in the device (200) and receiving a plurality of respective first responses (420a) from the physically unclonable function (210) in response to the plurality of challenges (410a) in an enrollment phase carried out whilst the device (200) is in a trusted network environment (500), and
wherein the authentication module (100) is configured to store the plurality of challenge-response pairs in a database (300) within the trusted network (500) in an enrollment phase carried out whilst the device (200) is in an trusted network environment (500);
wherein the authentication module (100) is configured to retrieve at least one of the plurality of challenge-response pairs from the database (300) and to send the challenge (410b) to the physically unclonable function (210) in the device (200) via the network connection (400b) in a remote authentication phase carried out whilst the device (200) is in an not-trusted network environment (510),
wherein the authentication module (100) is configured receive a second response (420b) from the physically unclonable function (210) in response to the challenge (420b), sent from the device (200) to the authentication module (100) via the network connection (400b), and
wherein the authentication module (100) is configured to compare the first response (420a) from the database (300) and the second response (420b) received from the device (200) and to authenticate the device (200) when the first and second response (420a, 420b) are the same.

7. The authentication module (100) of claim 6, wherein the authentication module (100) is configured to assign a predetermined lifetime to every challenge-response pair in the database (300) and is configured to not use the challenge-response pair for authentication after the predetermined lifetime has expired.

8. The authentication module (100) of claims 6 and 7, wherein the authentication module (100) is configured to use every challenge-response pair in the database (300) only once for authentication.

9. A device (200) for remote authentication with an authentication module (100) of claims 6 to 8 via a network connection (400a, 400b) with the device (200),
wherein the device (200) is configured to receive the plurality of challenges (410a) from the authentication module (100) and to send via the network connection (400a) the plurality of respective first responses (420a) received from a physically unclonable function (210) in the device (200) in response to the plurality of challenges (410a) in an enrollment phase carried out whilst the device (200) is in an trusted network environment (500),
wherein the device (200) is configured to receive a challenge (410b) from the authentication module (100) and to send via the network connection (400b) a second response (420b) received from a physically unclonable function (210) in the device (200) in response to the challenge (410b) in a remote authentication phase carried out whilst the device (200) is in an not-trusted network environment (510).

10. The device (200) of claim 9, wherein the physically unclonable function (210) in the device (200) is a part of regular hardware circuitry on the device (200), preferably a bistable circuitry.

11. The device of claim 10, wherein the physically unclonable function (210) in the device (200) is a static random-access memory of the device (200).

12. A system configured to perform the method of claim 1 to 5 to authenticate a device (200) according to claims 9 to 11 via a network connection (400a, 400b) with the device (400), wherein the system comprises a remote authentication module (100) according to claims 6 to 8.
